# FASCICULE DE BREVET EUROPEEN

(11) **EP 0 689 866 B1**
(45) Date de publication et mention de la délivrance du brevet: **02.04.2003**
(21) Numéro de dépôt: 95401543.4
(22) Date de dépôt: 28.06.1995
(51) Int. Cl.: B01F 17/00, A01N 25/14

(54) **Agent dispersant pour formulations solides phytosanitaires**
Dispergierendes Mittel für feste Pflanzenschutzformulierungen
Dispersing agent for solid plant-protective formulations

(30) Priorité: 29.06.1994 FR 9407996
(43) Date de publication de la demande: 03.01.1996
(73) Titulaire: RHODIA CHIMIE, 92408 Courbevoie Cédex (FR)
(72) Inventeur: Branati, Valerio, I-20020 Arese (IT); Marchetto, Antonio, I-21047 Saronno (IT); Gubelmann, Isabelle, F-75016 Paris (FR)
(74) Mandataire: Dubruc, Philippe

(56) Documents cités:
- EP-A- 0 201 417
- EP-A- 0 488 660
- EP-A- 0 522 906
- FR-A- 2 524 261
- GB-A- 1 399 005
- GB-A- 2 238 960
- US-A- 3 737 551
- US-A- 3 986 979
- US-A- 4 310 520

## Description

La présente invention a pour objet un nouvel agent dispersant pour formulations solides phytosanitaires, l'utilisation dudit agent pour la préparation de granulés phytosanitaires dispersables, ainsi que lesdits granulés eux-mêmes.

Les formulations phytosanitaires solides, à savoir les "poudres mouillables" et les "granulés dispersables", connaissent actuellement un large développement, car elles permettent d'éviter l'emploi de solvants potentiellement toxiques et peuvent être conditionnées dans des emballages facilement recyclables ou en sachets hydrosolubles. L'applicateur ou l'utilisateur du grand public est ainsi mieux protégé.

Ces formulations solides sont composées, outre de la matière active phytosanitaire, d'agents dispersants, liants, mouillants et désintégrants. Elles sont généralement obtenues par prébroyage de la matière active solide avec les différents additifs solides, avant de préparer par ajout d'eau, une dispersion concentrée, qui sera par la suite agglomérée dans un drageoir ou dans une turbosphère, ou qui sera extrudée, avant d'être séchée à l'aide d'un lit fluide.

Actuellement les agents dispersants mis en oeuvre doivent être solides ; ce sont des polymères comme les lignosulfonates (sels de sodium, calcium ou ammonium), les copolymères anhydride maleique/isobutylène (sels de sodium ou d'ammonium), les acides phénylsulfoniques condensés (sels de sodium), ou encore les polymères naphtalènesulfonate/formaldéhyde condensés (sels de sodium ou d'ammonium).

Par exemple, dans la demande EP 201417, est décrite une composition tensioactive utilisable dans des formulations phytosanitaires solides, comprenant un copolymère, obtenu à partir d'un acide carboxylique insaturé et d'un monomère oléfinique, combiné à un sulfate et/ou un ester phosphate d'un composé aromatique alcoxylé.

Toujours à titre d'exemple, dans la demande FR 2524261, une composition phytosanitaire comprenant en tant que matière active, du fénarimol, les tensioactifs mis en oeuvre sont notamment à base d'alkylnaphtalène sulfonate et de lignosulfonate ou d'alkylnapthalène sulfonate et du produit issu de la condensation de naphtalène sulfonate et de formaldéhyde.

Dans la demande GB 2238960, sont décrits des granulés dispersables comprenant une matière active à base de phosphite et une combinaison agent dispersant/agent mouillant. Parmi les agents mouillants sont cités les alkylnaphtalène sulfonates, les alcools gras éthoxylés, les alkylphénols ou arylphénols éthoxylés, les sulfosuccinates. En tant qu'agent dispersants sont mentionnés les produits issus de la condensation de naphtalène sulfonate et de formaldéhyde, les polyacrylates, les lignosulfonates, les phénylsulfonates. Les additifs incorporés dans cette formulation sont sous forme solide.

Cette restriction est due aux exigences de procédé, qui ne permet pas l'ajout d'additif liquide, à moins de réaliser un prémélange dans l'eau, qui sera ensuite utilisé pour la granulation.

La demande EP 522 906 décrit des poudres mouillables comprenant une matière active phytosanitaire solide, obtenues par solubilisation de ladite matière active dans un solvant approprié comprenant un émulsifiant. La solution obtenue est ensuite déposée sur une charge servant de support. Les émulsifiant sont choisis notamment parmi les tensioactifs non ioniques, tels que les alcools gras, les amides gras, les arylphénols, les tristyrylphénols éthoxylés/propoxylés, des composés anioniques comme les alkylbenzène sulfonate, les alkylnaphtalène sulfonates, les lignosulfonates, et sont incorporés avec la matière active sous une forme solubilisée dans le solvant. Par conséquent, les agents tensio-actifs liquides ou visqueux à température ambiante, comme les alkylphénols éthoxylés ou les di- ou tri-styrylphénols éthoxylés, couramment utilisés comme agents dispersants en formulation liquide (en particulier dans les microémulsions, émulsions concentrées, concentrés émulsionnables ou les suspensions concentrées) ne peuvent être employés. Par ailleurs, lorsqu'on évalue ces produits dans les formulations solides, en particulier dans les "granulés dispersables", outre le fait qu'ils soient difficiles à mettre en oeuvre, on constate que ce ne sont pas de bons dispersants, c'est-à-dire qu'ils conduisent à des granulés ayant une une dispersabilité et une suspensivité médiocre.

La demanderesse a trouvé que l'association d'un lignosulfonate et de certains di- ou tri-styrylphénols éthoxylés éventuellement sulfatés, conduisent à un agent dispersant pour formulations solides phytosanitaires, et ce avec un "rapport performances / prix" particulièrement interessant. En effet une synergie a été constatée entre ces deux types de dispersants, ce qui procure à leur mélange des propriétés dispersantes, pour un bon nombre de matières actives, bien supérieures à celle d'un lignosulfonate (de faible prix) pris isolément, et au moins voisines de celles des polymères dispersants les plus performants (mais onéreux) dans ce type d'application.

La présente invention a pour objet un agent dispersant pour formulations solides phytosanitaires, caractérisé en ce qu'il consiste :
- (a) en au moins un lignosulfonate de métal alcalin, alcalino-terreux ou d'ammonium comme constituant (a), associé à
- (b) au moins un di- ou tri-(phényl-1 éthyl)phénol éthoxylé, éventuellement sulfaté, contenant de 7 à moins de 20 motifs oxyéthylénés comme constituant (b),
le rapport pondéral constituant (a) / constituant (b) étant de l'ordre de 95/5 à 70/30, de préférence de l'ordre de 90/10 à 75/25.

L'agent dispersant faisant l'objet de l'invention, peut-être préparé par mélange de ses constituants.
Il est tout particulièrement intéressant d'obtenir ce mélange sous une forme solide manipulable, notamment d'une poudre coulable. Un moyen pour obtenir une telle poudre est d'atomiser une solution aqueuse contenant les deux constituants (a) et (b).

La présente invention a donc plus particulièrement pour objet un agent dispersant en poudre, susceptible d'être obtenu par atomisation d'une solution aqueuse renfermant
- (a) au moins un lignosulfonate de métal alcalin, alcalino-terreux ou d'ammonium comme constituant (a)
- (b) et au moins un di- ou tri-(phényl-1 éthyl)phénol éthoxylé, éventuellement sulfaté, contenant de 7 à moins de 20 motifs oxyéthylénés comme constituant (b),
le rapport pondéral constituant (a) / constituant (b) étant de l'ordre de 95/5 à 70/30, de préférence de l'ordre de 90/10 à 75/25, en quantité correspondant à environ 40 à 60 parties en poids d'eau pour 100 parties en poids du mélange des deux constituants.

Il est à noter que les composés (b) sous une forme totalement sulfatée sont aussi particulièrement indiqués pour entrer dans la composition selon l'invention.

Parmi les constituants (a), on peut citer les lignosulfonates de Na, K, Ca, Mg, NH₄ et tout particulièrement celui de Na, et pour des raisons économiques, celui de Ca.

Parmi les constituants (b), on peut citer
. le di-(phényl-1 éthyl)phénol éthoxylé, contenant 10 motifs oxyéthylénés
. le di-(phényl-1 éthyl)phénol éthoxylé, contenant 7 motifs oxyéthylénés
. le di-(phényl-1 éthyl)phénol éthoxylé sulfaté, contenant 7 motifs oxyéthylénés
. le tri-(phényl-1 éthyl)phénol éthoxylé, contenant 8 motifs oxyéthylénés
. le tri-(phényl-1 éthyl)phénol éthoxylé, contenant 16 motifs oxyéthylénés
. le tri-(phényl-1 éthyl)phénol éthoxylé sulfaté, contenant 16 motifs oxyéthylénés

L'opération d'atomisation peut être réalisée dans un atomiseur selon les techniques bien connues de l'homme de l'art ; la température de l'air à l'entrée se situe généralement vers 150-300°C, et celle à la sortie vers 80-100°C.

L'agent dispersant, faisant l'objet de l'invention, est tout particulièrement bien adapté à la préparation de granulés pesticides (herbicides, insecticides, fongicides), puisqu'il se présente préférentiellement sous forme d'une poudre coulable.

Un autre objet de l'invention consiste en des formulations phytosanitaires solides, notamment sous forme de granulés, à base d'une matière active phytosanitaire solide et de l'agent dispersant ci-dessus décrit.

Lesdites formulations solides phytosanitaires sont favorablement constituées
- de 0,01 à 90 % en poids de matière active phytosanitaire
- de 0,1 à 20 % en poids de l'agent dispersant faisant l'objet de l'invention
- de 0 à 10 % en poids d'un agent liant désintégrant et/ou liant
- de 0 à 10 % en poids d'un agent anti-mottant
- de 0 à 10 % en poids d'un agent stabilisant chimique
- et de 0 à 50 % en poids de charges inerte
par rapport au poids de formulation solide.

Parmi les matières actives pouvant être présentes dans lesdites formulations, on peut citer les suivantes :

| | | | |
|---|---|---|---|
| DIURON | LINURON | NEBURON | CARBARYL |
| ATRAZINE | AMETRYN | CARBOXIM | FENTIN ACETATE |
| ZIRAM | MANEB | ZINEB | CARBENDAZIM |
| CHLOROTHALONIL | | oxychlorure de cuivre | |

A titre d'exemple, on peut mentionner en tant que :
- agent mouillant : les agents anioniques tels que alkylnaphtalène sulfonates, alkylbenzènes sulfonates, alkylsulfosuccinates, taurates, alkylsulfates, ... ou non-ioniques tels que les diols acétyléniques, les alkylphénols éthoxylés ...
- agent désintégrant et/ou liant : l'amidon, les polyvinylpyrrolidones réticulées, la cellulose microcristalline, la carboxyméthylcellulose de sodium réticulée, les polysaccharides du soja, les résines échangeuses d'ions, les copolymères oxyde d'éthylène/oxyde de propylène, les alkylphénols polyethoxylés ...
- agent anti-mottant : les phosphates d'ammonium ou de sodium, le carbonate ou bicarbonate de sodium, l'acétate de sodium, le métasilicate de sodium, les sulfates de magnésium, zinc ou calcium, l'hydroxyde de magnésium, le chlorure de calcium, les tamis moléculaires, les alkylsulfosuccinates de sodium, les oxydes de baryum ou de calcium ...
- agent stabilisant chimique : les sulfates de métaux alcalino-terreux ou de transition, l'hexamétaphosphate de sodium, le chlorure de calcium, l'anhydride borique ...,
charges inertes : les argiles, les silices synthétiques et de diatomées, les silicates de calcium ou magnésium, le dioxyde de titane, les oxydes d'aluminium, zinc ou calcium, les carbonates de calcium ou de magnésium, les sulfates de sodium, ammonium, calcium, le noir de carbone ...

Lesdites formulations peuvent être obtenues par mélange de ces constituants, broyage à sec dudit mélange, agglomération par ajout d'eau aux particules broyées, extrusion ou granulation, puis séchage à l'aide d'un lit fluide jusqu'à obtenir des granulés présentant une humidité résiduelle de l'ordre de 0,1 à 2% en poids.

Pour une bonne réalisation de l'invention, l'agglomération des particules broyées est réalisée par ajout d'environ 10 à 20 % en poids d'eau par rapport au poids de particules ; l'opération d'extrusion ou de granulation est realisée selon des techniques bien connues de l'homme de l'art, par exemple extrusion à travers une filière, une grille, ... granulation à l'aide d'un drageoir, d'une turbosphère, ...

Les exemples suivants sont donnés à titre illustratifs.

### Exemple 1

### Préparation de l'agent dispersant

On introduit un mélange constitué de
- 90 parties en poids de lignosulfonate de calcium
- et 10 parties en poids de tri-(phényl-1 éthyl)phénol éthoxylé, contenant 16 motifs oxyéthylénés
dans 100 parties d'eau.
La solution obtenue est introduite dans un atomiseur avec un débit de 5l/h, la température de l'air à l'entrée est de 300°C, celle à la sortie de l'ordre de 90-100°C. Onobtient une poudre coulable.

### Préparation de la formulation phytosanitaire

On prépare un mélange contenant :
- du ZIRAM 80% en poids
- du SUPRAGIL WP® 2% en poids (agent mouillant, diisopropylnaphtalènesulfonate de sodium commercialisé par RHONE-POULENC)
- l'agent dispersant ci-dessus préparé
   lignosulfonate/tri-(phényl-1 éthyl)phénol 16 OE (90/10) 10% en poids
- de l'amidon (agent désintégrant) 8% en poids
Ce mélange est broyé à sec dans un broyeur à jet d'air ; on obtient des particules de dimension de l'ordre de 10 à 20µm.
Les particules sont ensuite agglomérées à l'aide de 18 parties d'eau pour 100 parties de particules, dans un appareil LÖDIGE® (commercialisé par LÖDIGE).
L'agglomérat est alors extrudé à travers une filière de 0,8 mm de diamètre.
Les granulés sont ensuite séchés dans un lit fluide AEROMATIC® (commercialisé par NIRO) jusqu'à obtenir une humidité résiduelle de 2 % desdits granulés.

### Dispersabilité

5g de granulés sont versés dans une éprouvette de 250ml remplie d'eau de dureté D (342ppm, suivant la norme CIPAC MT-18 décrite dans Collaborative International Pesticides Analytical council Handbook, Vol.1, Ed. G.R.AW - 1970-)
L'éprouvette est bouchée par un bouchon rodé, puis retournée jusqu'à ce que la totalité des granulés soit désintégrée et dispersée. On note le nombre de retournements necessaire. Le nombre de retournements est de 5, la dispersibilité est donc bonne.

### Suspensivité

Le taux de suspensivité des granulés dans de l'eau D est déterminé selon la norme
CIPAC MT-15.
Celui-ci est de 100%.

### Exemple 2 (comparatif)

On prépare des granulés selon le mode opératoire de l'exemple 1, en mettant en oeuvre 10 % de lignosulfonate de calcium seul au lieu de 10 % de mélange lignosulfonate de calcium / tri-(phényl-1 éthyl)phénol 16 OE (90/10).
Les caractéristiques de la formulation sont les suivantes :
. Dispersibilité : bonne (5 retournements)
. Taux de suspensivité : 50%

### Exemple 3 (comparatif)

On prépare des granulés selon le mode opératoire de l'exemple 1, en mettant en oeuvre 10 % de lignosulfonate de sodium seul au lieu de 10 % de mélange lignosulfonate de calcium / tri-(phényl-1 éthyl)phénol 16 OE (90/10).
Les caractéristiques de la formulation sont les suivantes :
. Dispersibilité : bonne (5 retournements)
. Taux de suspensivité : 67%

### Exemple 4 (comparatif)

### Préparation de la formulation phytosanitaire

On prépare un mélange contenant :
- du ZIRAM 80 parties en poids
- du diisopropylnaphtalènesulfonate de sodium (agent mouillant) 2 parties en poids
- de l'amidon (agent désintégrant) 8 parties en poids

Ce mélange est broyé à sec dans un broyeur à jet d'air ; on obtient des particules de dimension de l'ordre de 10 à 20µm.
Après introduction 10 parties en poids de tri-(phényl-1 éthyl)phénol 16 OE comme seul agent dispersant, les particules sont agglomérées à l'aide de 18 parties d'eau pour 100 parties de particules, dans un appareil LÖDIGE® (commercialisé par LÖDIGE). L'agglomérat est alors extrudé à travers une filière de 0,8 mm de diamètre.
Les granulés sont ensuite séchés dans un lit fluide AEROMATIC® (commercialisé par NIRO) jusqu'à obtenir une humidité résiduelle de 2 % desdits granulés.
Les caractéristiques de la formulation sont les suivantes :
. Dispersibilité : bonne (10 retournements)
. Taux de suspensivité : 32%

### Exemple 5

### Préparation de l'agent dispersant

On introduit un mélange constitué de
- 90 parties en poids de lignosulfonate de calcium
- et 10 parties en poids de tri-(phényl-1 éthyl)phénol éthoxylé, contenant 16 motifs oxyéthylénés
dans 100 parties d'eau.
La solution obtenue est introduite dans un atomiseur avec un débit de 5l/h, la température de l'air à l'entrée est de 300°C, celle à la sortie de l'ordre de 90-100°C. Onobtient une poudre coulable.

### Préparation de la formulation phytosanitaire

On prépare un mélange contenant :
- du DIURON 85% en poids
- du SOPROPHOR AS/860® 5% en poids (agent mouillant, alcool gras en C₁₀ éthoxylé absorbé sur silice commercialisé par RHONE-POULENC)
- l'agent dispersant ci-dessus préparé
   lignosulfonate/tri-(phényl-1 éthyl)phénol 16 OE (90/10) 10% en poids
Ce mélange est broyé à sec dans un broyeur à jet d'air ; on obtient des particules de dimension de l'ordre de 10 à 20µm.
Les particules sont ensuite agglomérées à l'aide de 18 parties d'eau pour 100 parties de particules, dans un appareil LÖDIGE® (commercialisé par LÖDIGE).
L'agglomérat est alors extrudé à travers une filière de 0,8 mm de diamètre.
Les granulés sont ensuite séchés dans un lit fluide AEROMATIC® (commercialisé par NIRO) jusqu'à obtenir une humidité résiduelle de 2 % desdits granulés.
Les caractéristiques de la formulation sont les suivantes :
. Dispersibilité : bonne (5 retournements)
. Taux de suspensivité : 95%.

### Exemple 6 (comparatif)

On prépare des granulés selon le mode opératoire de l'exemple 5, en mettant en oeuvre 10 % de lignosulfonate de calcium seul au lieu de 10 % de mélange lignosulfonate de calcium / tri-(phényl-1 éthyl)phénol 16 OE (90/10).
Les caractéristiques de la formulation sont les suivantes :
. Dispersibilité : bonne (5 retournements)
. Taux de suspensivité : 21%.

### Exemples 7

Ces exemples ont pour objet de comparer les propriétés de formulations selon l'invention, et selon l'art antérieur, c'est-à-dire contenant un alkylphénol éthoxylé.

Les formulations suivantes ont été préparées :

| Composition | Exemple 7 selon l'invention | Exemple 7 comparatif |
|---|---|---|
| DIURON (herbicide) | 84 % | 84 % |
| lignosulfonate de calcium / SOPROPHOR DSS-7N | 10 % rapport 90/10 | - |
| lignosulfonate de calcium/nonylphénol éthoxylé sulfaté | - | 10 % raport 90/10 |
| ANTAROX BO/327 | 1 % | 1 % |
| charges : kaolin | 2 % | 2 % |
| amidon | 3 % | 3 % |

Le SOPROPHOR DSS-7N est un distyrylphénol éthoxylé sulfaté, neutralisé par de la triéthanolamine, sous forme d'un sel d'ammonium.
Le nonylphénol éthoxylé (30 OE) est sulfaté et sous la forme d'un sel d'ammonium. L'ANTAROX BO/327 est un tensioactif en C₉-C₁₁ étho-propoxylé.
Le lignosulfonate est un sel de calcium (le BRETAX), du type lignine.

Les tests de suspensivité sont réalisés suivant la norme CIPAC MT-15 avec de l'eau D. Les tests de vieillissement accéléré sont réalisés en maintenant 5 g de granulés dans un tube à essais, plongé pendant 2 heures dans un bain d'eau thermostaté à 70 °C.

Les résultats sont les suivants :

| **Test** | **Exemple 7 selon l'invention** | **Exemple 7 comparatif** |
|---|---|---|
| Suspensivité initiale | 76 % | 20 % |
| Suspensivité après le test de viellissement accéléré | 71 % | 19 % |

## Revendications

1. Agent dispersant pour formulations solides phytosanitaires, **caractérisé en ce qu'**il consiste :
- (a) en au moins un lignosulfonate de métal alcalin, alcalino-terreux ou d'ammonium comme constituant (a), associé à
- (b) au moins un di- ou tri-(phényl-1 éthyl)phénol éthoxylé, éventuellement sulfaté, contenant de 7 à moins de 20 motifs oxyéthylénés comme constituant (b),
le rapport pondéral constituant (a) / constituant (b) étant de l'ordre de 95/5 à 70/30, de préférence de l'ordre de 90/10 à 75/25.

2. Agent dispersant en poudre, **caractérisé en ce qu'**il est susceptible d'être obtenu par atomisation d'une solution aqueuse renfermant
- (a) au moins un lignosulfonate de métal alcalin, alcalino-terreux ou d'ammonium comme constituant (a)
- (b) et au moins un di- ou tri-(phényl-1 éthyl)phénol éthoxylé, éventuellement sulfaté, contenant de 7 à moins de 20 motifs oxyéthylénés comme constituant (b),
le rapport pondéral constituant (a) / constituant (b) étant de l'ordre de 95/5 à 70/30, de préférence de l'ordre de 90/10 à 75/25, en quantité correspondant à environ 40 à 60 parties en poids d'eau pour 100 parties en poids du mélange des deux constituants.

3. Agent dispersant selon la revendication 1) ou 2), **caractérisé en ce que** le constituant (a) est du lignosulfonate de Na ou de Ca.

4. Agent dispersant selon l'une quelconque des revendications précédentes, **caractérisé en ce que** le constituant (b) est choisi parmi
. le di-(phényl-1 éthyl)phénol éthoxylé, contenant 10 motifs oxyéthylénés
. le di-(phényl-1 éthyl)phénol éthoxylé, contenant 7 motifs oxyéthylénés
. le di-(phényl-1 éthyl)phénol éthoxylé sulfaté, contenant 7 motifs oxyéthylénés
. le tri-(phényl-1 éthyl)phénol éthoxylé, contenant 8 motifs oxyéthylénés
. le tri-(phényl-1 éthyl)phénol éthoxylé, contenant 16 motifs oxyéthylénés
. le tri-(phényl-1 éthyl)phénol éthoxylé sulfaté, contenant 16 motifs oxyéthylénés

5. Agent dispersant selon l'une des revendications précédentes, **caractérisé en ce qu'**il comprend du lignosulfonate de calcium et du di(phényl-1 éthyl)phénol comprenant 7 motifs d'oxyde d'éthylène, sulfaté, neutralisé par de la triéthanolamine, sous forme d'un sel d'ammonium, dans un rapport pondéral de 90/10.

6. Utilisation de l'agent dispersant faisant l'objet de l'une quelconque des revendications précédentes pour la préparation de formulations phytosanitaires solides.

7. Formulations phytosanitaires à base d'une matière active phytosanitaire solide et de l'agent dispersant selon l'une quelconque des revendications 1) à 5).

8. Formulations phytosanitaires selon la revendication 7), **caractérisées en ce qu'**elles sont constituées de
- 0,01 à 90 % en poids de matière active phytosanitaire
- 0,1 à 20 % en poids de l'agent dispersant selon l'une des revendications 1) à 5)
- 0 à 10 % en poids d'un agent liant désintégrant et/ou liant
- 0 à 10 % en poids d'un agent anti-mottant
- 0 à 10 % en poids d'un agent stabilisant chimique
- et 0 à 50 % en poids de charges inerte
par rapport au poids de formulation solide.

## Claims

1. Dispersing agent for solid plant-protection formulations, **characterized in that** it comprises:
- (a) at least one alkali metal, alkaline earth metal or ammonium lignosulphonate as constituent (a), in combination with
- (b) at least one ethoxylated, optionally sulphated di- or tri (1-phenylethyl)phenol comprising from 7 to fewer than 20 oxyethylene units, as constituent (b), the constituent (a)/constituent (b) ratio by weight being of the order of 95/5 to 70/30, preferably of the order of 90/10 to 75/25.

2. Powder dispersing agent, **characterized in that** it is capable of being obtained by atomization of an aqueous solution comprising:
- (a) at least one alkali metal, alkaline earth metal or ammonium lignosulphonate as constituent (a),
- (b) and at least one ethoxylated, optionally sulphated, di- or tri(1-phenylethyl)phenol comprising from 7 to fewer than 20 oxyethylene units, as constituent (b),
the constituent (a)/constituent (b) ratio by weight being of the order of 95/5 to 70/30, preferably of the order of 90/10 to 75/25,
in an amount corresponding to approximately 40 to 60 parts by weight of water per 100 parts by weight of the mixture of the two constituents.

3. Dispersing agent according to claim 1 or 2, **characterized in that** the constituent (a) is Na or Ca lignosulphonate.

4. Dispersing agent according to any one of the preceding claims, **characterized in that** the constituent (b) is chosen from:
. ethoxylated di(1-phenylethyl)phenol comprising 10 oxyethylene units,
. ethoxylated di(1-phenylethyl)phenol comprising 7 oxyethylene units,
. sulphated, ethoxylated di(1-phenylethyl)phenol comprising 7 oxyethylene units,
. ethoxylated tri(1-phenylethyl)phenol comprising 8 oxyethylene units,
. ethoxylated tri(1-phenylethyl)phenol comprising 16 oxyetbylene units,
. sulphated, ethoxylated tri(1-phenylethyl)phenol comprising 16 oxyethylene units.

5. Dispersing agent according to one of the preceding claims, **characterized in that** it comprises calcium lignosulphonate and sulphated (1-phenylethyl)phenol comprising 7 ethylene oxide units which is neutralized with triethanolamine, in the form of an ammonium salt, in a ratio by weight of 90/10.

6. Use of the dispersing agent forming the subject-matter of any one of the preceding claims in the preparation of solid plant-protection formulations.

7. Plant-protection formulations based on a solid plant-protection active material and on the dispersing. agent according to any one of claims 1 to 5.

8. Plant-protection formulations according to claim 7, **characterized in that** they are composed of:
- 0.01 to 90% by weight of plant-protection active material,
- 0.1 to 20% by weight of the dispersing agent according to one of claims 1 to 5,
- 0 to 10% by weight of a disintegrating agent and/or binder.
- 0 to 10% by weight of an anticaking agent,
- 0 to 10% by weight of a chemical stabilizing agent,
- and 0 to 50% by weight of inert fillers,
with respect to the weight of solid formulation.

## Patentansprüche

1. Dispersionsmittel für feste Pflanzenschutzformulierungen, **dadurch gekennzeichnet, daß** es aus
(a) mindestens einem Alkalimetall-, Erdalkalimetall- oder Ammoniumlignosulfat als Bestandteil (a), kombiniert mit
(b) mindestens einem ethoxylierten Di- oder Tri(phenyl-1-ethyl)phenol, das gegebenenfalls sulfatiert ist, das 7 bis weniger als 20 Oxyethylen-Einheiten enthält, als Bestandteil (b) besteht, wobei das Gewichtsverhältnis Bestandteil (a)/Bestandteil (b) in der Größenordnung von 95/5 bis 70/30, vorzugsweise in der Größenordnung von 90/10 bis 75/25, liegt.

2. Pulverförmiges Dispersionsmittel, **dadurch gekennzeichnet, daß** es geeignet ist, durch Atomisierung einer wäßrigen Lösung hergestellt zu werden, welche umfaßt:
(a) mindestens ein Alkalimetall-, Erdalkalimetall- oder Ammoniumlignosulfat als Bestandteil (a),
(b) mindestens ein ethoxyliertes Di- oder Tri(phenyl-1-ethyl)phenol, das gegebenenfalls sulfatiert ist, das 7 bis weniger als 20 Oxyethylen-Einheiten enthält, als Bestandteil (b), wobei das Gewichtsverhältnis Bestandteil (a)/Bestandteil (b) in der Größenordnung von 95/5 bis 70/30, vorzugsweise in der Größenordnung von 90/10 bis 75/25, liegt, in einer Menge, die etwa 40 bis 60 Gew.-Teile Wasser pro 100 Gew.-Teile des Gemisches der zwei Bestandteile entspricht.

3. Dispersionsmittel nach Anspruch 1 oder 2, **dadurch gekennzeichnet, daß** der Bestandteil (a) Na- oder Calignosulfonat ist.

4. Dispersionsmittel nach einem der vorangehenden Ansprüche, **dadurch gekennzeichnet, daß** der Bestandteil (b) ausgewählt ist unter:
- ethoxyliertem Di-(phenyl-1-ethyl)phenol, das 10 Oxyethylen-Einheiten enthält,
- ethoxyliertem Di-(phenyl-1-ethyl)phenol, das 7 Oxyethylen-Einheiten enthält,
- sufatiertem ethoxyliertem Di-(phenyl-1-ethyl)phenol, das 7 Oxyethylen-Einheiten enthält,
- ethoxyliertem Tri-(phenyl-1-ethyl)phenol, das 8 Oxyethylen-Einheiten enthält,
- ethoxyliertem Tri-(phenyl-1-ethyl)phenol das 16 Oxyethylen-Einheiten enthält,
- sulfatiertem ethoxyliertem Tri-(phenyl-1-ethyl)phenol, das 16 Oxyethyleneinheiten enthält.

5. Dispersionsmittel nach einem der vorangehenden Ansprüche, **dadurch gekennzeichnet, daß** es Calciumlignosulfonat und Di(phenyl-1-ethyl)phenol, das 7 Ethylenoxid-Einheiten umfaßt, sulfatiert ist, durch Triethanolamin neutralisiert ist und in Form eines Ammoniumsalzes vorliegt, im Gewichtsverhältnis 90/10 umfaßt.

6. Verwendung des Dispersionsmittels, das Gegenstand eines der vorangehenden Ansprüche ist, zur Herstellung von festen Pflanzenschutzformulierungen.

7. Pflanzenschutzformulierungen auf der Basis eines festen Materials, das als Pflanzenschutzmittel aktiv ist, und des Dispersionsmittels nach einem der Ansprüche 1 bis 5.

8. Pflanzennschutzformulierungen nach Anspruch 7, **dadurch gekennzeichnet, daß** sie aus
- 0,01 bis 90 Gew.-% wirksamem Pflanzenschutzmittel,
- 0,1 bis 20 Gew.-% des Dispersionsmittels nach einem der Ansprüche 1 bis 5,
- 0 bis 10 Gew.-% eines Zerfallsmittels und/oder eines Bindemittels,
- 0 bis 10 Gew.-% eines Klumpenverhinderungsmittels,
- 0 bis 10 Gew.-% eines chemischen Stabilisators,
- 0 bis 50 Gew.-% inerter Füllstoffe, bezogen auf das Gewicht der festen Formulierung, bestehen.
